(19) Europäisches Patentamt / European Patent Office / Office européen des brevets

(11) **EP 3 459 773 B1**

(12) **EUROPEAN PATENT SPECIFICATION**

(45) Date of publication and mention
of the grant of the patent:
**29.04.2020   Bulletin 2020/18**

(51) Int Cl.:
**B60K 1/00** *(2006.01)*      **B60K 23/04** *(2006.01)*
**B60K 23/08** *(2006.01)*

(21) Application number: **18191336.9**

(22) Date of filing: **28.08.2018**

(54) **DRIVING FORCE ADJUSTMENT APPARATUS**

ANTRIEBSKRAFTANPASSUNGSVORRICHTUNG

APPAREIL DE RÉGLAGE DE LA FORCE D'ENTRAÎNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.09.2017   JP 2017168708**

(43) Date of publication of application:
**27.03.2019   Bulletin 2019/13**

(73) Proprietor: **Mitsubishi Jidosha Kogyo Kabushiki
Kaisha
Tokyo 108-8410 (JP)**

(72) Inventor: **YAMAMURA, Takuya
Tokyo, 108-8410 (JP)**

(74) Representative: **Regimbeau
20, rue de Chazelles
75847 Paris Cedex 17 (FR)**

(56) References cited:
**WO-A1-2017/097678      JP-A- 2007 177 915
JP-A- 2014 037 884      US-A- 5 409 425
US-A- 6 024 182**

**Description**

FIELD

This disclosure relates to an apparatus that adjusts driving forces of the left and right wheels of a vehicle.

BACKGROUND

A driving force adjustment apparatus is known to the inventors in which a differential apparatus interposed between the left and right wheels of a vehicle and a planetary gear mechanism and a motor are combined such that distribution of the driving force (torque distribution) between the left and right wheels can be changed. In such a driving force adjustment apparatus as just described, the motor rotates passively in response to the difference between rotational speeds of the left and right wheels upon turning of the vehicle to absorb the rotational speed difference. Further, as the motor operates, the driving force difference between the left and right wheels increases or decreases to change the distribution of the driving force between the left and right wheels. On the other hand, if rotation of the motor is restrained, then the differential motion is limited and the traction performance is improved (e.g. JP 2007-177915 A).

In a published driving force adjustment apparatus, a differential mechanism for distributing a driving force transmitted from a driving source to the left and right wheels is formed separately from a mechanism for changing the distribution of driving force between the left and right wheels. For example, in a right and left driving force distribution apparatus described in JP 2007-177915 A, two planetary gear mechanisms, which serve as a distribution mechanism for changing distribution of a driving force between the left and right wheels, are arranged so as to be adjacent to a differential apparatus serving as the differential mechanism. This arrangement tends to easily worsen the mountability and increase the weight.

SUMMARY

TECHNICAL PROBLEMS

The present invention has been made in view of such a subject as described above, and it is an object of the present invention to provide a driving force adjustment apparatus that integrates a differential mechanism for the left and right wheels with an adjustment mechanism for adjusting driving forces of the left and right wheels and that achieves enhancement in mountability and weight reduction of the apparatus.

SOLUTION TO PROBLEMS

To attain the above object, the driving force adjustment apparatus including a driving source that drives a left shaft and a right shaft of a vehicle, and a motor that regulates driving forces that are to be distributed to the left shaft and the right shaft. The driving force adjustment apparatus further includes: a left side gear train that adjusts a reduction ratio of the left shaft; a right side gear train that adjusts a reduction ratio of the right shaft; and a planetary gear mechanism that comprises four elements and has two degrees of freedom, the four elements being connected each to one of the driving source, the motor, the left side gear train, and the right side gear train.

ADVANTAGEOUS EFFECTS

By connecting the driving source, the motor, the left side gear train, and the right side gear train through the planetary gear mechanism, a function for distributing a driving force of the driving source to the left and right shafts and a function for adjusting the driving forces between the left and right shafts can be merged with a simple structure. Accordingly, this makes it possible to reduce the weight and the size of the entire apparatus and to achieve enhancement in mountability and weight reduction of the apparatus.

BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:
FIG. 1 is a skeleton diagram of a driving force adjustment apparatus according to an embodiment;

FIGs. 2A to 2C are velocity diagrams of a driving force adjustment apparatus;

FIG. 3 is a skeleton diagram of a driving force adjustment apparatus according to a modification;

FIG. 4 is a skeleton diagram of a driving force adjustment apparatus according to another modification; and

FIG. 5 is a skeleton diagram of a driving force adjustment apparatus according to an additional modification.

DESCRIPTION OF EMBODIMENTS

[1. Structure]

In the following, a driving force adjustment apparatus 10 as an embodiment is described with reference to the drawings.

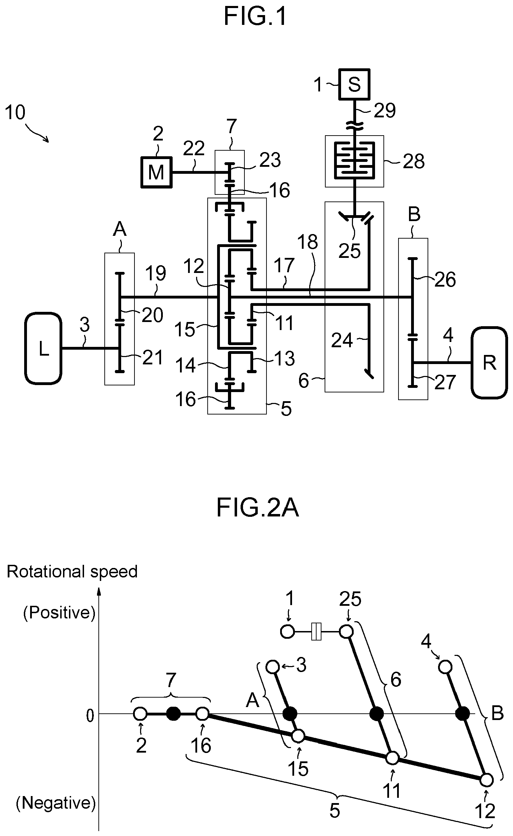

The driving force adjustment apparatus 10 of FIG. 1 compatibly has a function for transmitting a driving force transmitted from the driving source 1 of the vehicle to the left and right wheels to let the vehicle travel and a function for actively adjusting the difference between the rotational speeds of the left and right wheels to change the distribution of driving force. The driving force adjustment apparatus 10 can be applied to either the front wheels or the rear wheels. The driving force adjustment apparatus 10 is interposed between a left shaft 3 and a right shaft 4 of the vehicle. In the driving force adjustment apparatus 10, a planetary gear mechanism 5 including at least four rotational element is used in place of a differential apparatus in which four bevel gears are opposed to one another. Hereinafter, the left shaft 3 and the right shaft 4 are sometimes simply referred to as the vehicle shafts 3 and 4.

The driving force adjustment apparatus 10 includes the driving source 1, a motor 2, the planetary gear mechanism 5, a driving gear train 6, a motor gear train 7, a gear train A (left side gear train), and a gear train B (right side gear train). The driving source 1 drives both the left shaft 3 and the right shaft 4 that are connected to driving wheels of the vehicle, and is exemplified by a gasoline engine, a diesel engine, a driving motor, and a driving motor generator. The motor 2 is an electric motor that adjusts the distribution of driving force between the left and right wheels and has a function for positively generates a difference between the rotational speeds of the left and right wheels.

The motor 2 takes charge of regulating driving forces to be distributed to the left shaft 3 and the right shaft 4. The motor 2 is combined with the planetary gear mechanism 5, the gear train A, and the gear train B, and has a function for providing the adjusting driving forces that have opposite signs from each other and the same absolute value to the left shaft 3 and the right shaft 4. The electric power to drive the motor 2 is supplied from a non-illustrated on-vehicle battery. The driving force of the motor 2 is controlled by a non-illustrated electronic controlling apparatus (computer). For example, when the motor 2 is an AC electric motor, the electronic controlling apparatus controls the driving force of the motor 2 by adjusting the frequency of the AC electric power to be supplied to the motor 2. In contrast, when the motor 2 is a DC electric motor, the electronic controlling apparatus controls the driving force of the motor 2 by adjusting the electric current to be supplied to the motor 2.

The planetary gear mechanism 5 is a planetary gear mechanism which has four input/output shafts (four elements) coaxially arranged with one another and which has two degree of freedom. The four input/output shafts are connected each to one of the driving source 1, the motor 2, the gear train A, and the gear train B. As illustrated in FIG. 1, the planetary gear mechanism 5 includes a first sun gear 11, a second sun gear 12, a first planetary gear 13, a second planetary gear 14, a carrier 15, and a ring gear 16. The rotational center of the first sun gear 11 is connected to a first sun gear shaft 17, and the rotational center of the second sun gear 12 is connected to a second sun gear shaft 18. On the outer circumference of the first sun gear 11, the first planetary gear 13 is arranged in a state of meshing with the first sun gear 11, and on the outer circumference of the second sun gear 12, the second planetary gear 14 is arranged in a state of meshing with the second sun gear 12. The first planetary gear 13 and the second planetary gear 14 are connected so as to corotate, and are further connected to the carrier 15 through a common shaft. The rotational center of the carrier 15 is connected to a carrier shaft 19. The carrier 15 functions for supporting the rotational centers of the first planetary gear 13 and the second planetary gear 14 such that the rotational centers are coaxially rotatable with the first sun gear 11 and the second sun gear 12. On the outer side of the second planetary gear 14, the annular ring gear 16 is arranged in a state of meshing with the second planetary gear 14. The first planetary gear 13 is not engaged with the ring gear 16.

The ring gear 16, the carrier 15, the first sun gear 11, and the second sun gear 12 are capable of transmitting power to one another, and have respective structures (positions, shapes, and teeth numbers) set such that the rotation speeds thereof on a velocity diagram are linearly arranged in this sequence. The position of the center of the planetary gear mechanism 5 (e.g., the first sun gear shaft 17, the second sun gear shaft 18, and the carrier shaft 19) is disposed at a position offset from the left shaft 3 and the right shaft 4. The planetary gear mechanism 5 of the present embodiment is arranged at a position offset from the vehicle shafts 3 and 4 toward the front side of the vehicle.

The driving gear train 6 is a gear train interposed between the driving source 1 and the planetary gear mechanism 5, and has a function for adjusting the reduction ratio of the driving source 1 (i.e., the reduction ratio of a driving force input from the side of the driving source 1). The driving gear train 6 of the present embodiment is connected to the first sun gear 11 through the first sun gear shaft 17 of the planetary gear mechanism 5. The driving gear train 6 includes a first-sun-gear-shaft side gear 24 and a driving-shaft side gear 25. The first-sun-gear-shaft side gear 24 and the driving-shaft side gear 25 are bevel gears. The first-sun-gear-shaft side gear 24 is coaxially and slidably arranged with the second sun gear shaft 18. The driving-shaft side gear 25 is arranged such that the rotation shaft of thereof is perpendicular to the rotation shaft of the first-sun-gear-shaft side gear 24, and is connected to the driving source 1 through the electronically controlled coupling 28.

The electronically controlled coupling 28 is a multi-plate-type clutch used to arbitrarily set the torque transmission amount within a range from 0 % to 100 % by increasing or decreasing the fastening force of clutch plates build therein. The electronically controlled coupling 28 is connected to the driving source 1 through a driving shaft 29. In cases where the driving source 1 of the vehicle is an engine and the distance between the engine and the driving gear train 6 is large, the electronically controlled coupling 28 is connected to the engine through a non-illustrated propeller shaft. The propeller shaft extends in the forward and rearward direction of the vehicle at a central location in the vehicle widthwise direction. The quotient of the division of the teeth number of the first-sun-gear-shaft side gear 24 by the teeth number of the driving-shaft side gear 25 is regarded as the reduction ratio $\rho_6$ of the driving gear train 6.

The motor gear train 7 is a gear train interposed between the motor 2 and the planetary gear mechanism 5, and has a function for adjusting the reduction ratio of the motor 2 (i.e., the reduction ratio of a driving force input from the side of the motor 2). The motor gear train 7 includes a motor-shaft side gear 23 and external teeth of the ring gear 16, which are arranged in such a manner that the motor-shaft side gear 23 meshes with the external teeth of the ring gear 16. This means that the motor gear train 7 is conceptually connected to the rotation shaft of the ring gear 16 and is connected to the ring gear 16 on a velocity diagram. The motor-shaft side gear 23 is connected to the motor 2 through a motor shaft 22. The extending direction of the motor shaft 22 is a direction being along the vehicle widthwise direction and being parallel with the left shaft 3 and the right shaft 4. The location where the motor shaft 22 of the present embodiment is arranged is set to be a position offset from the planetary gear mechanism 5 toward the front side of the vehicle. The quotient of the division of the teeth number of the external teeth of the ring gear 16 by the teeth number of the motor-shaft side gear 23 is regarded as the reduction ratio $\rho_4$ of the motor gear train 7.

The gear train A is a gear train interposed between a left wheel L and the planetary gear mechanism 5, and has a function for adjusting the reduction ratio of the left shaft 3 (i.e., reduction ratio of the driving force transmitted from the planetary gear mechanism 5 to the left shaft 3). The gear train A includes a carrier-shaft side gear 20 and a left-shaft side gear 21, which are both spur gears. The rotational center of the carrier-shaft side gear 20 is connected to the carrier shaft 19, and the rotational center of the left-shaft side gear 21 is connected to the left shaft 3. In the present embodiment, the quotient of the division of the teeth number of the left-shaft side gear 21 by the teeth number of the carrier-shaft side gear 20 is regarded as the reduction ratio $\rho_2$ of the gear train A.

The gear train B is a gear train interposed between a right wheel R and the planetary gear mechanism 5, and has a function for adjusting the reduction ratio of the right shaft 4 (i.e., reduction ratio of the driving force transmitted from the planetary gear mechanism 5 to the right shaft 4). The gear train B includes a second-sun-gear side gear 26 and a right-shaft side gear 27, which are both spur gears. The rotational center of the second-sun-gear side gear 26 is connected to the second sun gear shaft 18, and the rotational center of the right-shaft side gear 27 is connected to the right shaft 4. In the present embodiment, the quotient of the division of the teeth number of the right-shaft side gear 27 by the teeth number of the second-sun-gear side gear 26 is regarded as the reduction ratio $\rho_3$ of the gear train B.

Setting of the gear ratio (speed transmission ratio) of the driving force adjustment apparatus 10 will now be detailed described. The planetary gear mechanism 5, the gear train A, and the gear train B have structures that, when the motor 2 is not operating (i.e., when the rotational speed of the motor 2 is zero), causes the rotational speeds of the left shaft 3 and the right shaft 4 to coincide with each other, and also have reduction ratios that distribute the driving force transmitted from the driving source 1 equally to the left shaft 3 and right shaft 4. Here, the quotient of the division of the teeth number of the first sun gear 11 by the teeth number of the second sun gear 12 is referred to as the reduction ratio $\rho_1$ (speed transmission ratio). In addition, the quotient of the division of the teeth number of the first sun gear 11 by the teeth number of the internal teeth of the ring gear 16 (meshing with the second planetary gear 14) is referred to as the reduction ratio $\rho_5$. As denoted by following Formula (1), the reduction ratio $\rho_5$ of the planetary gear mechanism 5 of the present embodiment is set to a value obtained by dividing the reduction ratio $\rho_1$ by a value obtained by subtracting two from the reduction ratio $\rho_1$. As denoted by following Formula (2), the reduction ratio $\rho_2$ of the gear train A is set to a value obtained by dividing the reduction ratio $\rho_1$ by twice the value obtained by subtracting one from the reduction ratio $\rho_1$. As denoted by following Formula (3), the reduction ratio $\rho_3$ of the gear train B is set to the half of the reduction ratio $\rho_1$.

[Expression 1]

$$\rho_5 = \frac{\rho_1}{\rho_1 - 2} \qquad (1)$$

$$\rho_2 = \frac{\rho_1}{2(\rho_1 - 1)} \qquad (2)$$

$$\rho_3 = \frac{\rho_1}{2} \qquad (3)$$

The reduction ratio $\rho_4$ of the motor gear train 7 and the reduction ratio $\rho_6$ of the driving gear train 6 are appropriately set in accordance with driving forces that the motor 2 and the driving source 1 can output. In the present embodiment, the driving force of the left shaft 3 is given by the following Formula (4), and the driving force of the right shaft 4 is given by the following Formula (5). The term "driving source driving force" here means a driving force at the downstream side of the electronically controlled coupling 28 (i.e., the driving force input into the driving gear train 6). A value is calculated by multiplying the reduction ratio $\rho_6$ of the driving gear train 6 and the driving source driving force and then dividing the product by two, and another value is calculated by dividing the product of the reduction ratios $\rho_1$ and $\rho_4$ and the motor driving force by twice the value obtained by subtracting two from the reduction ratio $\rho_1$. A value obtained by subtracting the latter value from the former value is the driving force of the left shaft 3. On the other hand, a value obtained by summing the former value and the latter value is the driving force of the right shaft 4.
[Expression 2]

$$(\text{driving force of the left shaft})$$

$$= \frac{\rho_6 \times (\text{driving source driving force})}{2}$$

$$- \frac{\rho_1 \times \rho_4 \times (\text{motor driving force})}{2(\rho_1 - 2)} \qquad (4)$$

$$(\text{driving force of the right shaft})$$

$$= \frac{\rho_6 \times (\text{driving source driving force})}{2}$$

$$+ \frac{\rho_1 \times \rho_4 \times (\text{motor driving force})}{2(\rho_1 - 2)} \qquad (5)$$

The traveling driving force of the vehicle is given by the sum of the driving force of the left shaft and the driving force of the right shaft as denoted by following Formula (6). The driving force difference between the left and right shafts is given by the difference between the driving force of the left shaft and the driving force of the right shaft as denoted by following Formula (7). As denoted by following Formula (8), the rotational speed of the motor 2 is the half of the value obtained by dividing the product of the reduction ratios $\rho_1$ and $\rho_4$ and the rotational speed difference between the left and right shafts by a value obtained by subtracting two from the reduction ratio $\rho_1$.
[Expression 3]

$$(\text{traveling driving force}) = \rho_6 \times (\text{driving source driving force}) \qquad (6)$$

$$\left(\begin{array}{c}\text{driving force difference} \\ \text{between the left and right shafts}\end{array}\right) = \frac{\rho_1 \times \rho_4 \times (\text{motor driving force})}{\rho_1 - 2} \tag{7}$$

$$(\text{rotational speed of the motor}) = \frac{\rho_1 \times \rho_4 \times \left(\begin{array}{c}\text{rotational speed difference} \\ \text{between the left and right shafts}\end{array}\right)}{2(\rho_1 - 2)} \tag{8}$$

[2. Action]

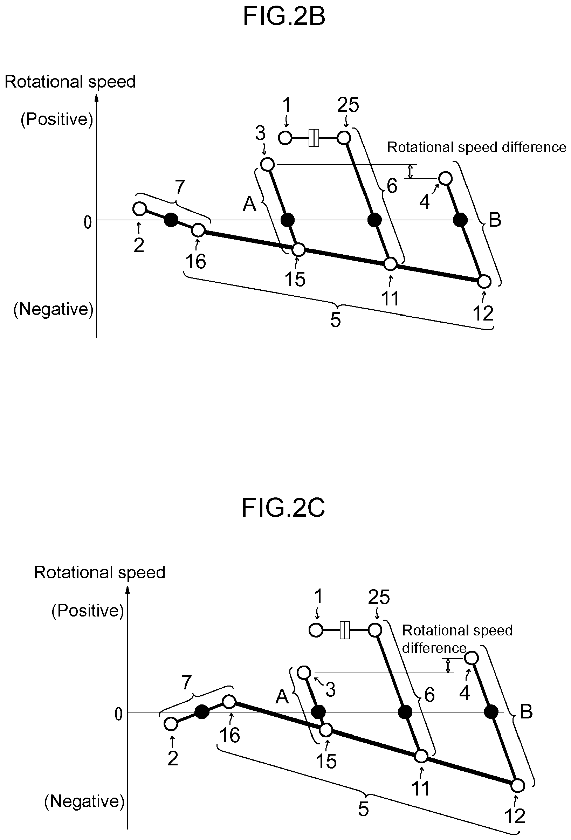

FIG. 2A is a velocity diagram when the motor 2 is stopping; and FIGs. 2B and 2C are velocity diagrams when the motor 2 is rotating. A velocity diagram simply expresses the relationship among rotational speeds (angular velocities) of multiple rotational elements correlated to one another. As shown in FIGs. 2A to 2C, in a velocity diagram of the present embodiment, a coordinate of the ordinate axis represents a rotational speed of a rotational element. The coordinate of the abscissa axis corresponding to the reference line at which the rotational speed comes to be zero is set in accordance with an angular velocity ratio (or a rotational speed ratio, a circumference length ratio, a teeth number ratio) based on one of the correlated rotational elements. Normally, the respective abscissa positions of the rotational elements are set in such a manner that the rotational speeds of the correlated rotational elements are on the same straight line regardless the magnitudes of the rotational numbers thereof. In other words, the abscissa positions are set such that the straight lines that connect each pair of the rotational elements has the collinear relationship.

As shown in FIG. 2A, under a state where the motor 2 is stopping, the rotational speed of the ring gear 16 is zero. Accordingly, the velocity diagram of the planetary gear mechanism 5 is represented by an inclined straight line that assumes the rotational speed of the ring gear 16 is zero and that declines as the coordinate of the abscissa-axis approaches the right end. The inclination of the inclined straight line becomes a sharper inclination as the rotational speed of the first sun gear 11 generated by the driving force input from the driving source 1 increases. Then the driving force transmitted to the left shaft 3 through the carrier 15 and the driving force transmitted to the right shaft 4 through the second sun gear 12 increase, so that the respective rotational speeds increase. In contrast, since the reduction ratios of the planetary gear mechanism 5, the gear trains A, and the gear train B are set such that, when the motor 2 is not operating, the rotational speeds of the left and right shafts coincide with each other, the positions in the vertical direction of the left shaft 3 and the right shaft 4 coincide with each other on a velocity diagram and consequently the rotational speeds of the left and right wheels have the same value.

When the motor 2 is activated, the ring gear 16 rotates at a speed corresponding to the rotational speed of the motor 2. Since the ring gear 16, the carrier 15, the first sun gear 11, and the second sun gear 12 of the planetary gear mechanism 5 are in the collinear relationship at that time, the inclination of the inclined straight line representing the relationship changes. On the other hand, if the rotational speed of the driving source 1 is unchanged, the rotational speed of the first sun gear 11 is unchanged and therefore the inclined straight line moves like a seesaw that causes the first sun gear 11 to function as the fulcrum. Specifically, as denoted in FIG. 2B, the rotational speed of the second sun gear 12 decreases concurrently with an increase of the rotational speed of the carrier 15, so that a rotational speed difference is generated between the left shaft 3 and the right shaft 4. Otherwise, as shown in FIG. 2C, the rotational speed of the second sun gear 12 increases concurrently with the decrease of the rotational speed of the carrier 15, so that a rotational speed difference is generated between the left shaft 3 and the right shaft 4. The magnitude and the sign of the rotational speed difference depends on the magnitude and the sign of the rotational speed of the motor 2.

[3. Effects]

(1) According to the above driving force adjustment apparatus 10, combination only of the planetary gear mechanism 5, the gear train A, and the gear train B can merge a function for distributing the driving force of the driving source 1 to the left and right wheels with a function for adjusting a difference between the driving forces of the left and right shafts by a simple structure. Accordingly worsening of the mountability and increasing of the weight of the entire apparatus can be suppressed.

(2) By adjusting the reduction ratios of the planetary gear mechanism 5, the gear train A, and the gear train B, since the driving force generated in the driving source 1 can be distributed equally to the left shaft 3 and the right shaft 4, the driving force transmitted from the driving source 1 can be used as the traveling driving force likewise a traditional differential apparatus. Since the sum of the adjusting driving forces to the left shaft 3 and the right shaft 4 generated by the driving force of the motor 2 comes to be zero, it is possible to suppress the worsening of the traveling performance due to interference of the adjusting driving forces with the traveling driving force. Furthermore, since the rotational speed of the motor 2 can have a value of zero under a state where the left shaft 3 and the right shaft 4 rotate the same (i.e., the vehicle is traveling straight), a rotation loss generated by unnecessary rotation of the motor 2 can be reduced. It should be noted that, in the present embodiment, the reduction ratios $\rho_2$, $\rho_3$, and $\rho_5$ can be set on the basis of the above Formulae (1)-(3).

(3) By providing the driving gear train 6, the rotational speed input from the driving source 1 into the planetary gear mechanism 5 can be regulated, so that a desired traveling driving force can be obtained without unnecessarily increasing the driving force of the driving source 1. Likewise, by providing the motor gear train 7, the rotational speed input from the motor 2 into the planetary gear mechanism 5 can be regulated, so that desired adjusting driving forces to the left and right shafts can be obtained without unnecessarily increasing the driving force of the motor 2.

(4) By interposing the electronically controlled coupling 28 between the driving source 1 and the driving gear train 6, the above driving force adjustment apparatus 10 can be used as a rear differential apparatus of a front-wheel driving vehicle. Consequently, the application of the driving force adjustment apparatus 10 can be widened.

[4. Modifications]

The foregoing embodiment is merely exemplary and has no intention to exclude various modifications and application of techniques not explicitly described in the embodiment. The structure of the embodiment can be variously modified without departing from the scope of the embodiment. The respective structures of the embodiment may be selected, omitted, or combined according to the requirement. For example, in the driving force adjustment apparatus 10 illustrated in FIG. 1, the motor 2 is arranged on the left side from the planetary gear mechanism 5, but the position of the motor 2 can be arbitrarily determined. Alternatively, the motor 2 may be arranged on the right side from the planetary gear mechanism 5. Further alternatively, a bevel gear may be included in the motor gear train 7 and the motor 2 may be arranged on the forward side or the rear side of the planetary gear mechanism 5.

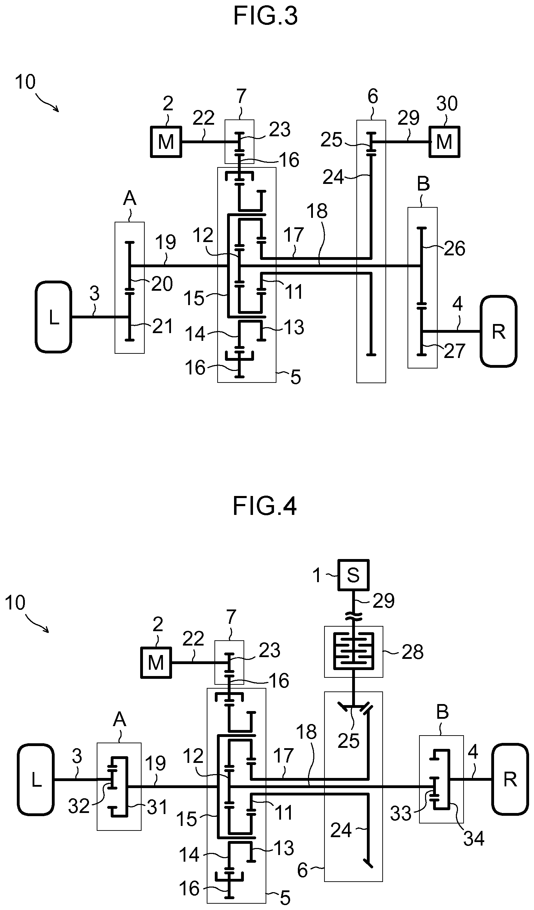

In cases where an electric motor 30 (second motor) is used as the driving source 1, the electronically controlled coupling 28 may be omitted as illustrated in FIG. 3. In this case, the driving gear train 6 interposed between the electric motor 30 and the planetary gear mechanism 5 may be a pair of spur gears, and the driving shaft 29 of the electric motor 30 may be arranged in parallel with the left shaft 3 and the right shaft 4. This layout makes it easy to apply the driving force adjustment apparatus 10 to a rear differential apparatus for an electric vehicle and a hybrid vehicle as well as a gasoline vehicle.

Further alternatively, the gear trains A and B may be formed of eccentric gear trains as shown in FIG. 4. An eccentric gear train here means a gear train in which the rotation shaft of correlated rotational elements deviate from one another (i.e., not coaxially). A gear train A of FIG. 4 includes a carrier-shaft side gear 31 and an eccentric gear 32, and the rotational center of the eccentric gear 32 is arranged at a position offset from the rotational center of the carrier-shaft side gear 31 toward the front side of the vehicle. Likewise, a gear train B includes an eccentric gear 33 and a right-shaft side gear 34, and the rotational center of the eccentric gear 33 is arranged at a position offset from the rotational center of the right-shaft side gear 34 toward the rear side of the vehicle. By connecting the planetary gear mechanism 5 to the left and right shaft 3 and 4 through the eccentric gear trains, the distances between the input shaft and the output shaft of each of the gear trains A and B can be shortened. Accordingly, the mountability onto a vehicle having a narrow space along the forward and rearward direction can be enhanced.

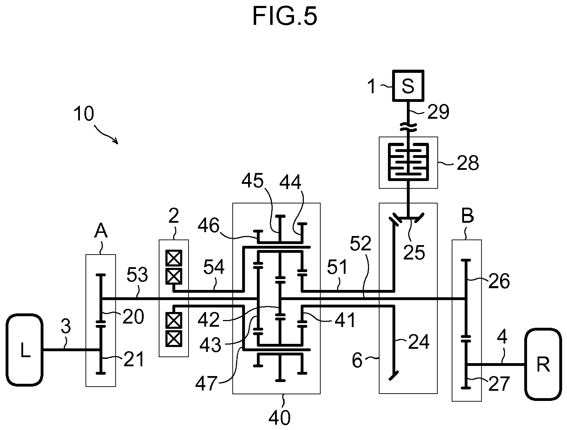

As illustrated in FIG. 5, the planetary gear mechanism 5 may be replaced with a planetary gear mechanism 40 having three planetary gears that corotate. The planetary gear mechanism 40 includes a first sun gear 41, a second sun gear 42, a third sun gear 43, a first planetary gear 44, a second planetary gear 45, a third planetary gear 46, and a carrier 47. In addition to the above, the planetary gear mechanism 40 includes, as four input/output shafts coaxially arranged, a first sun gear shaft 51, a second sun gear shaft 52, a third sun gear shaft 53, and a carrier shaft 54. The first sun gear shaft 51 is connected to the rotational center of the first sun gear 41, and the second sun gear shaft 52 is connected to the rotational center of the second sun gear 42. Likewise, the third sun gear shaft 53 is connected to the rotational center of the third sun gear 43, and the carrier shaft 54 is connected to the rotational center of the carrier 47. The carrier 47 supports the rotational centers of the three planetary gears 44-46 by a common shaft. By using the planetary gear mechanism 40 having the above structure, since the motor 2 can be coaxially arranged with the rotation shaft of the planetary gear mechanism 40, the mountability onto a vehicle having a narrow space along the forward and rearward direction can be further enhanced.

REFERENCE SIGNS LIST

1    driving source

2      motor
3      left shaft
4      right shaft
5      planetary gear mechanism
6      driving gear train
7      motor gear train
10     driving force adjustment apparatus
28     electronically controlled coupling
A      gear train (left side gear train)
B      gear train (right side gear train)

**Claims**

1.  A driving force adjustment apparatus comprising a driving source (1) that drives a left shaft (3) and a right shaft (4) of a vehicle, and a motor (2) that regulates driving forces that are to be distributed to the left shaft (3) and the right shaft (4), the driving force adjustment apparatus **characterized by** comprising:

    a left side gear train (A) that adjusts a reduction ratio of the left shaft (3);
    a right side gear train (B) that adjusts a reduction ratio of the right shaft (4); and
    a planetary gear mechanism (5) that comprises four elements and has two degrees of freedom, the four elements being connected each to one of the driving source (1), the motor (2), the left side gear train (A), and the right side gear train (B).

2.  The driving force adjustment apparatus according to claim 1, **characterized in that**:

    the motor (2) provides each of adjusting driving forces to one of the left shaft (3) and the right shaft (4), the adjusting driving forces having a same absolute value and opposite signs; and
    the planetary gear mechanism (5), the left side gear train (A), and the right side gear train (B) have structures that make a rotational speed of the motor (2) zero when a rotational speed of the left shaft (3) coincides with a rotational speed of the right shaft (4), and have reduction ratios that distribute a driving force transmitted from the driving source (1) equally to the left shaft (3) and the right shaft (4).

3.  The driving force adjustment apparatus according to claim 1 or 2, **characterized by** further comprising:

    a driving gear train (6) that is interposed between the driving source (1) and the planetary gear mechanism (5) and that adjusts a reduction ratio of the driving source (1); and
    a motor gear train (7) that is interposed between the motor (2) and the planetary gear mechanism (5) and that adjusts a reduction ratio of the motor (2).

4.  The driving force adjustment apparatus according to any one of claims 1 to 3, **characterized by** further comprising an electronically controlled coupling (28) interposed between the driving source (1) and the planetary gear mechanism (5).

**Patentansprüche**

1.  Antriebskraft-Einstelleinrichtung, umfassend eine Antriebsquelle (1), die eine linke Welle (3) und eine rechte Welle (4) eines Fahrzeugs antreibt, und einen Motor (2), der Antriebskräfte regelt, die auf die linke Welle (3) und die rechte Welle (4) verteilt werden sollen, wobei die Antriebskraft-Einstellvorrichtung **dadurch gekennzeichnet ist, dass** sie umfasst:

    ein linksseitiges Getriebe (A), das ein Untersetzungsverhältnis der linken Welle (3) einstellt;
    ein rechtsseitiges Getriebe (B), das ein Untersetzungsverhältnis der rechten Welle (4) einstellt; und
    einen Planetengetriebemechanismus (5), der vier Elemente umfasst und zwei Freiheitsgrade aufweist, wobei die vier Elemente jeweils mit einem von der Antriebsquelle (1), dem Motor (2), dem linksseitigen Getriebe (A) und dem rechtsseitigen Getriebe (B) verbunden sind.

**2.** Antriebskraft-Einstelleinrichtung nach Anspruch 1, **dadurch gekennzeichnet, dass**:

der Motor (2) jeweils Einstellantriebskräfte für eine von der linken Welle (3) und der rechten Welle (4) bereitstellt, wobei die Einstellantriebskräfte einen gleichen Absolutwert und gegensätzliche Vorzeichen aufweisen; und der Planetengetriebemechanismus (5), das linksseitige Getriebe (A) und das rechtsseitige Getriebe (B) Strukturen aufweisen, die eine Drehzahl des Motors (2) null werden lassen, wenn sich eine Drehzahl der linken Welle (3) mit einer Drehzahl der rechten Welle (4) deckt, und Untersetzungsverhältnisse aufweisen, die eine Antriebskraft, die von der Antriebsquelle (1) übertragen wird, gleichmäßig auf die linke Welle (3) und die rechte Welle (4) verteilen.

**3.** Antriebskraft-Einstelleinrichtung nach Anspruch 1 oder 2, **dadurch gekennzeichnet, dass** sie weiter umfasst:

ein Antriebsgetriebe (6), das zwischen der Antriebsquelle (1) und dem Planetengetriebemechanismus (5) eingefügt ist und das ein Untersetzungsverhältnis der Antriebsquelle (1) einstellt; und ein Motorgetriebe (7), das zwischen dem Motor (2) und dem Planetengetriebemechanismus (5) eingefügt ist und das ein Untersetzungsverhältnis des Motors (2) einstellt.

**4.** Antriebskraft-Einstelleinrichtung nach einem der Ansprüche 1 bis 3, **dadurch gekennzeichnet, dass** sie weiter eine elektronisch gesteuerte Kupplung (28) umfasst, die zwischen der Antriebsquelle (1) und dem Planetengetriebemechanismus (5) eingefügt ist.

**Revendications**

**1.** Appareil de réglage de force d'entraînement comprenant une source d'entraînement (1) qui entraîne un essieu gauche (3) et un essieu droit (4) d'un véhicule, et un moteur (2) qui régule des forces d'entraînement qui doivent être distribuées à l'essieu gauche (3) et à l'essieu droit (4), l'appareil de réglage de force d'entraînement étant **caractérisé en ce qu'**il comprend :

un train d'engrenages côté gauche (A) qui règle un rapport de réduction de l'essieu gauche (3) ; un train d'engrenages côté droit (B) qui règle un rapport de réduction de l'essieu droit (4) ; et un mécanisme de train planétaire (5) qui comprend quatre éléments et a deux degrés de liberté, les quatre éléments étant raccordés chacun à un parmi la source d'entraînement (1), le moteur (2), le train d'engrenages côté gauche (A), et le train d'engrenages côté droit (B).

**2.** Appareil de réglage de force d'entraînement selon la revendication 1, **caractérisé en ce que** :

le moteur (2) fournit chacune des forces d'entraînement de réglage à un parmi l'essieu gauche (3) et l'essieu droit (4), les forces d'entraînement de réglage ayant une même valeur absolue et des signes opposés ; et le mécanisme de train planétaire (5), le train d'engrenages côté gauche (A), et le train d'engrenages côté droit (B) ont des structures qui rendent une vitesse de rotation du moteur (2) nulle lorsqu'une vitesse de rotation de l'essieu gauche (3) coïncide avec une vitesse de rotation de l'essieu droit (4), et ont des rapports de réduction qui distribuent une force d'entraînement transmise à partir de la source d'entraînement (1) de manière égale à l'essieu gauche (3) et l'essieu droit (4).

**3.** Appareil de réglage de force d'entraînement selon la revendication 1 ou 2, **caractérisé en ce qu'**il comprend en outre :

un train d'engrenages d'entraînement (6) qui est interposé entre la source d'entraînement (1) et le mécanisme de train planétaire (5) et qui règle un rapport de réduction de la source d'entraînement (1) ; et un train d'engrenages de moteur (7) qui est interposé entre le moteur (2) et le mécanisme de train planétaire (5) et qui règle un rapport de réduction du moteur (2).

**4.** Appareil de réglage de force d'entraînement selon l'une quelconque des revendications 1 à 3, **caractérisé en ce qu'**il comprend en outre un accouplement commandé électroniquement (28) interposé entre la source d'entraînement (1) et le mécanisme de train planétaire (5).

# FIG.1

# FIG.2A

## FIG.2B

## FIG.2C

# FIG.3

# FIG.4

# FIG.5

**REFERENCES CITED IN THE DESCRIPTION**

**Patent documents cited in the description**

- JP 2007177915 A